# EUROPÄISCHE PATENTSCHRIFT

(11) **EP 3 721 521 B1**
(45) Veröffentlichungstag und Bekanntmachung des Hinweises auf die Patenterteilung: **17.01.2024**
(21) Anmeldenummer: 18811532.3
(22) Anmeldetag: 29.11.2018
(51) Int. Cl.: H02J 3/01, H01F 38/00, H02J 3/38, H02M 1/44

(54) **TRANSFORMATOREINRICHTUNG ZUM ÜBERTRAGEN VON OBERWELLEN**
TRANSFORMER DEVICE FOR TRANSFERRING HARMONIC WAVES
MOYEN TRANSFORMATEUR POUR LA TRANSMISSION D'ONDES HARMONIQUES

(30) Priorität: 06.12.2017 DE 102017128989
(43) Veröffentlichungstag der Anmeldung: 14.10.2020
(73) Patentinhaber: Wobben Properties GmbH, 26607 Aurich (DE)
(72) Erfinder: BROMBACH, Johannes, 13437 Berlin (DE)
(74) Vertreter: Eisenführ Speiser
(86) Internationale Anmeldenummer: PCT/EP2018/082976
(87) Internationale Veröffentlichungsnummer: WO 2019/110411

(56) Entgegenhaltungen:
- CN-A- 104 868 485
- CN-A- 105 932 678
- CN-U- 202 602 285
- US-A1- 2004 246 749
- US-A1- 2009 073 726
- US-A1- 2010 201 338
- US-A1- 2015 263 636

## Beschreibung

Die vorliegende Erfindung betrifft eine Transformatoreinrichtung zum Transformieren eines ersten Wechselspannungssignals in ein zweites Wechselspannungssignals zum Einspeisen in ein elektrisches Versorgungsnetz. Zudem betrifft die vorliegende Erfindung auch ein Verfahren zum Transformieren eines ersten Wechselspannungssignals in ein zweites Wechselspannungssignal zum Einspeisen in ein elektrisches Versorgungsnetz. Darüber hinaus betrifft die vorliegende Erfindung auch eine Windenergieanlage zum Erzeugen elektrischer Leistung aus Wind zum Einspeisen in ein elektrisches Versorgungsnetz. Außerdem betrifft die vorliegende Erfindung auch einen Windpark.

Umrichtergekoppelte Erzeuger, wie beispielsweise Windenergieanlagen in einem Windpark, speisen teilweise gewollte und ungewollte Oberschwingungsströme in das elektrische Versorgungsnetz ein. Diese Oberschwingungsströme können auch als Oberwellenströme oder einfach als Oberwellen bezeichnet werden. Dabei dürfen die Oberschwingungsströme - entsprechend verschiedener nationaler und internationaler Normen - bestimmte Grenzen oftmals nicht überschreiten. Auch beim Betreiben von Windparks sind zu große Oberschwingungen in der Regel im Strom unerwünscht, der durch die einzelnen Windenergieanlagen erzeugten wird. Grundsätzlich sind unterschiedliche Möglichkeiten bekannt, um den Oberschwingungsstrom zu reduzieren. Beispielsweise können passive Filter eingesetzt, Umrichter in den Windenergieanlagen angepasst oder aktive Filter zur Reduktion von Oberschwingungen verwenden werden.

Dabei werden die genannten Möglichkeiten zur Reduzierung der Oberschwingungen größtenteils in jeder der Anlagen einzeln verbaut, so dass eine Vielzahl von Komponenten zur Oberschwingungskompensation notwendig ist.

Problematisch bei der Reduzierung von Oberschwingungen in einem elektrischen Versorgungsnetz oder in einem Windparknetz ist neben der beschriebenen Vielzahl der benötigten Anlagenkomponenten zudem, dass Leistungstransformatoren eine dämpfende Wirkung für hochfrequente Anteile im Strom aufweisen und damit hochfrequente Anteile schlechter übertragen.

Diese zuvor beschriebene dämpfende Wirkung der Transformatoren ist in den meisten Fällen zwar ein gewünschtes Verhalten, aber im Fall einer aktiven Oberwellenkompensation nachteilhaft. Bei einer aktiven Oberwellenkompensation wird z.B. ein Kompensationsstrom mit einem Oberwellenanteil zum Kompensieren eines Oberwellenanteils im Netz eingespeist, in dem die Oberwellen reduziert werden sollen. Die so gegenläufigen oberen Anteile löschen sich dann idealerweise gegenseitig aus. Soll eine Kompensation von Oberwellen über einen Transformator hinaus erreichen werden, beispielsweise um die durch die Nichtlinearitäten des Transformator selbst verursachten Oberwellen zu kompensieren, werden die entgegenwirkenden Oberwellenanteile dann jedoch durch die Leistungstransformatoren gedämpft bzw. gefiltert. So tritt in dem Netzabschnitt der nicht direkt mit einer aktiven Oberwellenkompensationeinheit, wie einem Umrichter oder einem aktiven Filter, verbunden ist, eine Verschlechterungen der Oberwellenkompensation durch den zwischengeschalteten Transformator auf. Die Oberwellenkompensationeinheit dabei direkt mit dem Mittelspannungsnetz zu verbinden, ist in den meisten Fällen aufgrund der zu hohen Spannung nicht möglich oder zumindest technisch herausfordernd.

Soll als ein konkretes Beispiel ein Umrichter in einer Windenergieanlage zur Oberwellenkompensation im Windpark genutzt werden, ist problematisch, dass die Windenergieanlage über einen Transformator mit dem Windpark verbunden ist. Der Umrichter kann dann zwar einen Kompensationsstrom mit einem Oberwellenanteil erzeugen, der dem Oberwellenanteil im Windpark Netz entgegenwirkt, dieser Oberwellenanteil kommt aber nicht so im Windparknetz an, da der zwischen der Windenergieanlage und dem Windpark installierte Transformator den hochfrequenten und entgegenwirkenden Oberwellenanteil beim Transformieren dämpft und dadurch regelmäßig auch verzerrt.

Das Deutsche Patent- und Markenamt hat in der Prioritätsanmeldung zu vorliegender Anmeldung folgenden Stand der Technik recherchiert: US 2010/0201338 A1, WO 2014/031959 A2, "Protection of hybrid transformers in the distribution grid"; J. Burkhard et al. und "The hybrid transformer - towards a smarter grid" ETH-Zürich.

Die Internationale Recherchebehörde hat zu vorliegender Anmeldung folgenden Stand der Technik recherchiert: US 2009/0073726 A1, CN 105932678 A, CN202602285 U, CN 104868485 A und US 2004/0246749 A1. Das Dokument US 2009/0073726 A1 betrifft ein System zur Erzeugung von elektrischem Wechselstrom hoher Qualität zur Versorgung eines elektrischen Hochspannungsnetzes. Das Dokument CN 105932678 A betrifft das Gebiet der Oberwellenkompensation von industriellen Umrichtersystemen und offenbart ein induktives Leistungs-Filtersystem, das eingesetzt wird, um Oberwellen zu kompensieren. Das Dokument CN202602285 U und das Dokument CN 104868485 A betreffen statische Blindleistungskompensatoren. Das Dokument US 2004/0246749 A1 betrifft ein Verfahren und ein Gerät zur Reduzierung des Erdverschiebungsstroms, der durch gewickelte Komponenten erzeugt wird.

Aufgabe der vorliegenden Erfindung ist es somit, zumindest eines der oben genannten Probleme zu adressieren. Insbesondere soll eine Lösung vorgeschlagen werden, die zumindest eine optimale Anbindung einer aktiven Oberwellenkompensation zur Kompensation von ungewünschten Oberwellen im Strom in einem Stromnetz ermöglicht. Zumindest soll zu bisher bekannten Lösungen eine alternative Lösung vorgeschlagen werden.

Erfindungsgemäß wird somit eine Transformatoreinrichtung nach Anspruch 1 vorgeschlagen. Diese ist zum Transformieren eines ersten Wechselspannungssignals in ein zweites Wechselspannungssignals zum Einspeisen in ein elektrisches Versorgungsnetz vorgesehen. Das erste Spannungssignal wird somit besonders auf eine höhere Spannung hochtransformiert.

Zum Eingeben des ersten Wechselspannungssignals weist die Transformatoreinrichtung einen primärseitigen Grundwellenanschluss auf, wobei das erste Wechselspannungssignals im Wesentlichen einen Grundwellenanteil aufweist bzw. ist. Hierzu können bspw. Anschlussklemmen vorgesehen sein. Der Grundwellenanteil bezeichnet ein sinusförmiges Signal, das besonders eine Netzfrequenz von 50Hz oder 60Hz aufweisen kann. Das erste Wechselspannungssignal kann dem Grundanteil im Wesentlichen entsprechen und dabei auch im Wesentlichen sinusförmig sein. Es kommt aber auch in Betracht, dass Oberschwingungen enthalten sind, die aber für diesen Grundwellenanschluss nicht oder weniger von Bedeutung sind.

Das erste Wechselspannungssignal kann besonders von einem Wechselrichter einer Windenergieanlage generiert werden, so dass in diesem Fall an den Grundwellenanschluss der Transformatoreinrichtung dieser Wechselrichter oder mehrere Wechselrichter angeschlossen sein können.

Neben dem Grundwellenanschluss weist die Transformatoreinrichtung zudem einen Oberwellenanschluss zum Eingeben wenigstens eines elektrischen Oberwellensignals auf, wobei das Oberwellensignal im Wesentlichen einen Oberwellenanteil aufweist. Der Oberwellenanteil bezeichnet dabei ein hochfrequentes Signal, das besonders eine Frequenz oder mehrere überlagerte Frequenzanteile aufweisen kann, die einem Vielfachen der Netzfrequenz bzw. Grundfrequenz von 50Hz oder 60Hz entsprechen.

Dieser Anschluss ist somit auch primärseitig an der Transformatoreinrichtung ausgebildet und kann bspw. ebenfalls Klemmen aufweisen und hier werden Oberwellen eingegeben. Es werden hierdurch für den Grundwellenanteil und den Oberwellenanteil getrennte Anschlüsse vorgeschlagen. Somit erfolgt eine getrennte Eingabe dieser beiden Signale.

Als dritten Anschluss weist die Transformatoreinrichtung zudem einen sekundärseitigen Überlagerungsanschluss zum Abgeben des zweiten Wechselspannungssignals auf. Das zweite Wechselspannungssignal besteht dabei im Wesentlichen aus dem in seiner Spannung transformierten Grundwellenanteil und dem in seiner Spannung transformierten Oberwellenanteil.

Die Transformatoreinrichtung weist somit einen Überlagerungs- bzw. Ausgangsanschluss auf, an dem das zweite Spannungssignal als Ausgangssignal bereitgestellt wird. Das erste Wechselspannungssignal und das Oberwellensignal werden also eingegeben und dass zweite Spannungssignal als gemeinsames überlagertes Signal der beiden anderen Signale abgegeben. In einem konkreten Ausführungsbeispiel ist an den Überlagerungsanschluss ein Windparknetz oder ein Netzabschnitt im elektrischen Versorgungsnetz angeschlossen, so dass das gemeinsame Signal mit dem überlagerten möglichst ungedämpften Oberwellenanteil zusammen mit dem Grundwellenanteil im Windpark oder in dem Netzabschnitt angelegt bzw. eingespeist wird.

Zu den zuvor beschriebenen Anschlüssen weist die Transformatoreinrichtung zudem wenigstens einen bewickelten magnetischen Kern zum Transformieren und nichtgalvanischen Überlagern des Grundwellenanteils und des Oberwellenanteils zum zweiten Wechselspannungssignal auf.

Damit das erste Wechselspannungssignal mit dem Oberwellensignal gemeinsam überlagert bzw. transformiert werden kann, umfasst die Transformatoreinrichtung wenigstens einen Transformatorkern, der wenigstens in einem Abschnitt bewickelt ist. Dazu kann der Transformatorkern zum Beispiel mehrere bewickelte Schenkel aufweisen.

Es findet eine Transformation unter Verwendung des wenigstens einen magnetischen Kerns statt, wie es auch grundsätzlich in einem bekannten Transformator durchgeführt werden kann. Zusätzlich wird aber der wenigstens eine Kern zum nichtgalvanischen Überlagern verwendet. Die Überlagerung erfolgt also besonders so, dass die elektrischen Eingangssignale, also das erste Wechselspannungssignal und das Oberwellensignal jeweils in ein magnetisches Signal in dem Kern gewandelt werden, und diese magnetischen Signale dann in dem Kern überlagert werden. Das resultierende magnetische Signal kann dann in das zweite Wechselspannungssignal gewandet und als solches am Überlagerungsanschluss ausgegeben werden.

Es kommt aber auch in Betracht, dass das erste Wechselspannungssignal mittels eines magnetischen Kerns, wie bei einem Transformator, in ein transformiertes Signal transformiert wird, also insbesondere in seiner Spannung hochtransformiert wird, und dann, mittels eines zweiten magnetischen Kerns das Oberwellensignal dem transformierten Signal überlagert wird. Dazu kann das transformierte Signal über eine erste Wicklung des zweiten Kerns geführt werden und das Oberwellensignal über eine zweite Wicklung des zweiten Kern in ein magnetisches Signal auf dem zweiten Kern gewandelt werden. Dieses magnetische Signal beeinflusst dann das transformierte Signal auf der ersten Wicklung des zweiten Kerns und dadurch kann das Oberwellensignal mit entsprechender Amplitude auf das transformierte Signal eingekoppelt werden. Das Ergebnis ist das zweite Wechselspannungssignal. Das Oberwellensignal wird dadurch selbst auch transformiert.

Es wurde erkannt, dass bei üblichen Oberschwingungskompensationsverfahren mit einer Oberwellenkompensationeinheit, wie z.B. ein speziell vorgesehener Umrichter oder ein aktives Filter, der durch die Kompensationseinheit erzeugte und eingeprägte Kompensationsstrom, durch übliche Transformatoren gedämpft bzw. gefiltert wird. Ein auf der Niederspannungsseite erzeugter Kompensationsstrom kann somit auf der Hochspannungsseite des Transformators verzerrt sein. Um das Problem zu lösen, wird hier vorgeschlagen, das Oberwellensignal, das für die Kompensation benötigt wird, von dem Grundsignal getrennt einzugeben, vorzugsweise auch davor getrennt zu erzeugen, und dann erst in der Transformationseinrichtung beide Signal zu überlagern. Diese teilweise getrennt Berücksichtigung beider Signale schafft die Möglichkeit, die Transformation jeweils auf die beiden Signal abzustimmen. Vereinfacht ausgedrückt werden beide Signale getrennt hochtransformiert, zumindest bis zur Wandlung in jeweils ein magnetisches Signal.

Dabei ist eine direkte elektrische Verbindung der Kompensationseinheit mit einem Windparknetz oder einem Mittelspannungsnetz ohne Transformationseinrichtung in der Regel nicht möglich, da die Spannung im Windparknetz oder im Mittelspannungsnetz zu hoch ist. Die Kompensationsvorrichtung kann somit schwierig direkt an das Mittelspannungsnetz angeschlossen werden. Aktive Kompensationsmaßnahmen auf Mittelspannungsebene sind zwar technisch möglich, aber technisch herausfordernd und damit teuer. Um einen besseren Effekt zur Reduzierung von Oberwellen im Windpark oder in einem Netzabschnitt zu erreichen, wird demnach vorgeschlagen, eine Transformationseinrichtung zu verwenden, die es ermöglicht, einen Oberwellenanteil trotz notwendiger Transformation in das Windparknetz oder in den Netzabschnitt einzuspeisen bzw. dort einem Grundsignal zu überlagern. Dies wird mittels der zuvor beschriebenen Transformatoreinrichtung dadurch erreicht, dass an einem zusätzlichen Anschluss, nämlich dem Oberwellenanschluss, zum Kompensieren ein Oberwellensignal zur Sekundärseite der der Transformatoreinrichtung aufaddiert bzw. überlagert werden kann. Somit ist es möglich, die Oberwellen im Windpark oder im gewünschten Netzabschnitt anzupassen bzw. effektiver zu reduzieren, da etwaige Dämpfungen durch zwischengeschaltete herkömmliche Transformatoren vermieden werden. Es wird somit in vorteilhafter Weise erreicht, dass eine effektive Oberwellenreduktion auch in elektrischen Netzen in höheren Spannungsbereichen umgesetzt werden kann, wie beispielsweise im Mittelspannungsbereich, und der erzeugte Kompensationsstrom auf Niederspannungsebene erzeugt wird.

Vorzugsweise wird vorgeschlagen, dass der wenigstens eine magnetische Kern, oder wenigstens einer davon einen Oberwellenüberlagerungsbereich zum separaten Einkoppeln des Oberwellenanteils aufweist. Dabei ist der Oberwellenüberlagerungsbereich mit wenigstens einer Oberwellenwicklung bewickelt, und diese mit dem Oberwellenanschluss elektrisch gekoppelt, um das elektrische Oberwellensignal in ein magnetisches Oberwellensignal in dem Oberwellenüberlagerungsbereich zu transformieren und mit dem Grundwellenanteil zu überlagern.

Die Transformatoreinrichtung weist somit einen magnetischen Kern auf, der an einem Bereich bzw. Kernabschnitt mit einer Oberwellenentwicklung bewickelt ist, die elektrisch mit dem Oberwellenanschluss verbunden ist. Der Bereich der mit der Oberwellenwicklung bewickelt und in dessen Nähe die magnetische Überlagerung des eingegebenen Oberwellensignals stattfindet, ist demnach der Oberwellenüberlagerungsbereich. So kann z.B. an den Oberwellenanschluss ein Oberwellensignal als Kompensationsstrom angelegt werden, der durch eine Oberwellensignalerzeugungseinheit erzeugt wurde. Im Oberwellenüberlagerungsbereich wird somit der Oberwellenanteil separaten eingekoppelt, nämlich in ein magnetisches Signal gewandelt. Das erste Wechselspannungssignal wird über eine andere Wicklung in denselben magnetischen Kern eingekoppelt, nämlich dort in ein magnetisches Signal gewandelt. Es wird dadurch der Grundwellenanteil und der Oberwellenanteil separat voneinander erzeugt und in ein magnetisches Signal auf demselben Kern gewandelt. Das kann auch bedeuten, dass der Kern zwei parallele Bereiche aufweist, nämlich für jedes Signal einen. Beide magnetischen Signale überlagern sich dann zu einem Gesamtmagnetsignal und daraus wird dann das zweite Wechselspannungssignal erzeugt. Das kann auch bedeuten, dass beide magnetischen Signale zu einander parallel in unterschiedlichen Pfaden des Kerns geführt werden, aber dabei durch eine gemeinsame sekundärseitige Wicklung geführt werden, in der daraus dann das zweite Wechselspannungssignal induziert wird.

Hier wird besonders vorgeschlagen, dass der Oberwellenüberlagerungsbereich dafür ausgelegt ist, möglichst verzerrungsfrei hochfrequente elektrische Signalanteile in ein magnetisches Signal zu wandeln. Dafür kann entsprechendes Magnetmaterial verwendet werden, das für den Bereich des ersten Wechselspannungssignals, also der Grundwelle, nicht benötigt wird. Beide Magnetmaterialien können nebeneinander angeordnet sein und jeweils einen Magnetpfad bilden. Zusätzlich oder alternativ können die Magnetmaterialen auch übereinander angeordnet sein, beispielsweise mit einem innenliegenden Transformatorblech, das von einem Ferrit umschlossen ist.

Vorzugsweise wird vorgeschlagen, dass der wenigstens eine magnetische Kern einen magnetischen Transformationsbereich zum Transformieren des ersten Wechselspannungssignals in das zweite Wechselspannungssignal aufweist. Dabei ist der Transformationsbereich mit einer Primärgrundwicklung bewickelt und mit dem Grundwellenanschluss elektrisch verbunden. Im Transformationsbereich ist zusätzlich auch die Sekundärgrundwicklung angeordnet, die mit dem Überlagerungsanschluss elektrisch gekoppelt ist.

Der Transformationsbereich ist somit ein Bereich bzw. bewickelter Kernabschnitt, der mit der Primärgrundwicklung und der Sekundärgrundwicklung bewickelt ist. Innerhalb dieses Bereiches sind besonders die beiden genannten Grundwicklungen miteinander magnetisch-induktiv gekoppelt. So wird erreicht, dass das erste Wechselspannungssignal von der Primärgrundwicklung zu der Sekundärgrundwicklung übertragen oder transformiert werden kann. Die genannten Grundwicklungen können auch als Hauptwicklungen in der Transformatoreinrichtung angesehen werden, die den Hauptteil der Leistungsübertragung von der Primärseite zur Sekundärseite übernehmen. Die Oberwellenwicklung bildet im Grunde eine Zusatzwicklung, um den eingegebenen Oberwellenanteil mit einzukoppeln und dann auf der Sekundärseite zu überlagern.

Zudem wird vorgeschlagen, dass eine bzw. die Oberwellenwicklung im Wesentlichen zur Sekundärwicklung benachbart angeordnet ist, insbesondere um das elektrische Oberwellensignal in ein magnetisches Oberwellensignal in dem Oberwellenüberlagerungsbereich zu transformieren und mit dem Grundwellenanteil zu überlagern.

Es wurde erkannt, dass sich eine besonders gute Einkopplung der Oberwellen auf der Sekundärseite der Transformatoreinrichtung einstellt, wenn die Oberwellenwicklung in der Nähe der Sekundärwicklungen angeordnet wird. Dies wird insbesondere dadurch erreicht, dass die Oberwellenwicklung direkt benachbart zur Sekundärwicklung angeordnet wird.

In einer besonderen Ausführungsform wird vorgeschlagen, dass über das Verhältnis der Wicklungsanzahl der Primärgrundwicklung und der Sekundärgrundwicklung eine Hochtransformation oder eine Herabtransformation oder eine 1-zu-1-Transformation eingestellt wird. So kann die Transformatoreinrichtung z.B. als Ersatz für einen herkömmlichen Transformator in einem Stromnetz eingesetzt werden.

Vorzugsweise wird vorgeschlagen, dass der Transformationsbereich und der Oberwellenüberlagerungsbereich überlappend ausgebildet sind, insbesondere so dass in einem Überlappungsabschnitt des magnetischen Kerns die Primärgrundwicklung, die Sekundärgrundwicklung und zusätzlich oder alternativ die Oberwellenwicklung in radialer Richtung in Lagen übereinander um den magnetischen Kern gewickelt sind. In dieser Ausführungsform sind also der Transformationsbereich und der Oberwellenüberlagerungsbereich übereinander geschichtet ausgebildet.

Es wurde erkannt, dass für einen einfachen und praktikablen konstruktiven Aufbau der Transformatoreinrichtung mit nur einem Transformatorkern, der sich aber aus mehreren Materialien zusammensetzen kann, eine geschichtete Bewickelung vorteilhaft ist. Beispielsweise kann an einem Schenkel des Transformatorkerns, der mit der Sekundärgrundwicklung bewickelt ist, eine Oberwellenwicklung in radialer Richtung in Lagen geschichtet über der Sekundärgrundwicklung angeordnet werden.

Zusätzlich oder alternativ ist die Oberwellenwicklung im Wesentlichen zur Sekundärgrundwicklung benachbart angeordnet. Diese Variante ist besonders dann vorteilhaft, wenn zwei getrennte Transformatorkerne verwendet werden. Dabei wird eine besonders effektive Reduktion der Oberwellen erreicht, wie zuvor bereits beschrieben, wenn zusätzlich oder alternativ die Oberwellenwicklung im Wesentlichen zur Sekundärgrundwicklung benachbart angeordneten ist.

Vorzugsweise wird vorgeschlagen, dass der wenigstens eine magnetische Kern in einen Hauptkern und einen Nebenkern aufgeteilt ist. Dabei ist der Hauptkern mit der Primärgrundwicklung und einer Sekundärgrundwicklung bewickelt. Der Hauptkern ist somit zum Transformieren des ersten Wechselspannungssignals in ein zweites Wechselspannungsgrundsignal vorgesehen, wobei das zweite Wechselspannungsgrundsignal an einer sekundärseitigen Grundleitung ausgegeben wird. Zusätzlich ist der Nebenkern mit einer bzw. der Oberwellenwicklung bewickelt und mit der sekundärseitigen Grundleitung magnetisch gekoppelt. Dies wird vorgesehen, um den Oberwellenanteil zu transformieren und dem zweiten Wechselspannungsgrundsignal zum zweiten Wechselspannungssignal zu überlagern.

Dadurch kann die Überlagerung des ersten Wechselspannungssignals mit dem Oberschwingungssignal als eine Reihenschaltung zweier Stromquellen abgebildet werden.

Vorzugsweise wird vorgeschlagen, dass der Nebenkern als Hochfrequenztransformatorkern ausgebildet ist. Besonders vorteilhaft an dieser Ausführung des Nebenkerns als ein Hochfrequenztransformatorkern ist, dass die hochfrequenten Anteile des Oberwellensignals, das mit dem ersten Wechselspannungssignal zum zweiten Wechselspannungssignal überlagert werden soll, weniger stark durch das Kernmaterial gedämpft werden. So können gewünschte hochfrequente Anteile im Oberwellensignal in auf die Sekundärseite eingetragen werden, ohne dass diese stark gefiltert oder gedämpft werden. Sie bleiben möglichst verzerrungsfrei. Der Hauptkern kann hierbei einen Großteil der zu übertragenden Leistung übertragen, ohne ein besonderes Kernmaterial zu benötigen. Es reicht aus, den Nebenkern mit speziellem Material vorzusehen, wobei dieser Kern nur die Leistung des Oberwellensignal zu übertragen braucht. Hierdurch ist eine klare Trennung der Kerne für diese beiden Signale erreichbar.

Vorzugsweise wird vorgeschlagen, dass das wenigstens eine elektrische Oberwellensignal zum Eingeben an den primärseitigen Oberwellenanschluss mittels einer Oberwellensignalerzeugungseinheit erzeugt wird, insbesondere mit einem Hochfrequenzumrichter. Als eine vorteilhafte praktikable Lösung hat sich herausgestellt, einen Hochfrequenzumrichter zu verwenden. Sollen z.B. die Oberwellen in einem Windparknetz reduziert werden, kann eine ohnehin zur Verfügung stehende einzelne Windenergieanlage als Kompensations-Windenergieanlage genutzt werden, indem ein vorhandener Umrichter der Windenergieanlage als Hochfrequenzumrichter verwendet wird, um das benötigte Oberwellensignal zu erzeugen. Besonders wird somit auch vorgeschlagen, dass das erste Wechselspannungssignal und das Oberwellensignal getrennt, insbesondere in getrennten Einrichtungen erzeugt werden.

Zusätzlich oder alternativ wird dazu vorgeschlagen, statt des Umrichters ein aktives Filter zu verwenden. Dadurch kann auch auf einfache Art und Weise ein System um die Funktionalität der Erzeugung eines Oberwellensignals ergänzt werden.

In einer besonderen weiteren Ausführungsform erzeugt die Oberwellensignalerzeugungseinheit das elektrische Oberwellensignal als ein Niederspannungssignal bis 1000V.

Dies ist besonders vorteilhaft, da für den Niederspannungsbereich im Gegensatz zum Mittelspannungsbereich mit einer Spannung im Bereich von 1kV bis 52kV nicht so starke Schutzmaßnahmen notwendig sind.

Vorzugsweise wird vorgeschlagen, dass ein Messmittel zum Erfassen des sekundärseitigen zweiten Wechselspannungssignals vorgesehen ist, und dass ein Signalweg vorgesehen ist, um das erfasste Signal darüber an die Oberwellensignalerzeugungseinheit zu übertragen. Dabei ist die Transformatoreinrichtung dazu vorbereitet, das Oberwellensignal in Abhängigkeit des durch das Messmittel erfassten Signals zu erzeugen.

Es wurde erkannt, dass die Reduktion von Oberwellen in einem Windpark oder einem Netzabschnitt des Versorgungsnetzes durch eine Rückführung des erfassten sekundärseitigen zweiten Wechselspannungssignals zur Oberwellensignalerzeugungseinheit vorteilhaft ist. Durch diese Rückführung kann gezielt ein Oberwellensignal erzeugt werden, um die Oberwellen zu reduzieren. Die Erzeugung kann mit geringer Spannungsamplitude erfolgen.

Vorzugsweise wird vorgeschlagen, dass die Transformatoreinrichtung, insbesondere der Oberwellenanschluss, dazu vorbereitet ist, dass das Oberwellensignal als ein Oberspannungssignal am Oberwellenanschluss eingegeben wird, um das transformierte Oberspannungssignal dem transformierten Grundwellenanteil, nämlich dem zweiten Wechselspannungsgrundsignal, zu überlagern, wobei insbesondere eine zusätzliche Transformatoreinheit vorgesehen ist, um das am Oberwellenanschluss eingegebene Oberspannungssignal zum Überlagern herunterzutransformieren. Dazu ist vorzugsweise für die Transformatoreinrichtung vorgesehen, das Oberspannungssignal in Abhängigkeit eines erfassten Oberwellenstrombedarfs zu erzeugen, insbesondere mittels der Oberwellensignalerzeugungseinheit zu erzeugen.

Das erste Wechselspannungssignal wird somit getrennt zum zweiten Wechselspannungsgrundsignal transformiert. Dem wird das transformierte Oberwellensignal aufmoduliert. Das transformierte Oberwellensignal benötigt somit keine hohe Amplitude, weil es nicht die Amplitude des zweiten Wechselspannungsgrundsignals aufzuweisen braucht, sondern durch das Aufmodulieren auf dieser Amplitude aufsetzt. Das wurde erkannt und daher vorgeschlagen, das Oberspannungssignal herabzutransformieren, was auch als herunterzutransformieren bezeichnet werden kann.

So kann beispielsweise mittels der Oberwellensignalerzeugungseinheit ein Oberwellensignal mit 400 V als Niederspannungssignal erzeugt werden, dass anschließend mittels der separaten Transformatoreinheit auf z.B. 20 V herabtransformiert und im Windparknetz oder in einem Abschnitt im Versorgungsnetz überlagert wird.

Hierbei kann auch die zusätzliche Transformatoreinheit sekundärseitig mit wenigen Windungen auskommen. In einer bevorzugten Ausführungsform weist sie sekundärseitig nur eine Windung auf.

In einer weiteren erfindungsgemäßen Ausführungsform wird ein Verfahren nach Anspruch 12 vorgeschlagen. Dieses ist zum Transformieren eines ersten Wechselspannungssignals in ein zweites Wechselspannungssignal zum Einspeisen in ein elektrisches Versorgungsnetz vorgesehen und umfasst die folgenden Schritte: Eingeben des ersten Wechselspannungssignals in einen primärseitigen Grundwellenanschluss, wobei das erste Wechselspannungssignal im Wesentlichen einen Grundwellenanteil aufweist oder ein Grundwellenanteil ist. Eingeben wenigstens eines elektrischen Oberwellensignals in einen primärseitigen Oberwellenanschluss, wobei das Oberwellensignal im Wesentlichen einen Oberwellenanteil aufweist. Abgeben des zweiten Wechselspannungssignals aus einem sekundärseitigen Überlagerungsanschluss, wobei das zweite Wechselspannungssignal im Wesentlichen den in seiner Spannung transformierten Grundwellenanteil und den in seiner Spannung transformierten Oberwellenanteil aufweist. Transformieren und nichtgalvanisches Überlagern des Grundwellenanteils und des möglichst ungedämpften Oberwellenanteils zum zweiten Wechselspannungssignal mit wenigstens einem magnetischen Kern, um Oberwellen in einem Netzabschnitt anzupassen, insbesondere zu reduzieren, der mit dem sekundärseitigen Überlagerungsanschluss elektrisch verbunden ist. Besonders ist ein etwaiger Oberwellenanteil im ersten Wechselspannungssignal signifikant kleiner als das Oberwellensignal. Das Verfahren arbeitet insbesondere so, und weist die entsprechenden Vorteile auf, wie vorstehend zu wenigstens einer Ausführungsform der Transformatoreinrichtung beschrieben wurde.

Vorzugsweise wird somit auch vorgeschlagen, dass eine Transformatoreinrichtung nach einem der zuvor beschriebenen Ausführungsformen zum Ausführen des Verfahrens verwendet wird.

In einer weiteren erfindungsgemäßen Ausführungsform wird vorgeschlagen, dass eine Windenergieanlage zum Erzeugen elektrischer Leistung aus Wind zum Einspeisen in ein elektrisches Versorgungsnetz vorgesehen ist, die über wenigstens eine Transformatoreinrichtung nach einer der vorstehenden Ausführungsformen mit dem elektrischen Netz verbunden ist.

In einer weiteren erfindungsgemäßen Ausführungsform mit vorgeschlagen, dass ein Windpark zum Erzeugen elektrischer Leistung aus Wind zum Einspeisen in ein elektrisches Versorgungsnetz vorgesehen ist, der aus wenigstens eine Windenergieanlage nach einer der vorstehenden Ausführungsformen aufweist und/oder dass er eine Transformatoreinrichtung nach einer der vorstehenden Ausführungsformen aufweist.

Demnach weiß der Windpark wenigstens eine Windenergieanlage auf, die über die Transformatoreinrichtung mit dem Windparknetz verbunden ist. Diese Windenergieanlage, die auch als Kompensation-Windenergieanlage aufgefasst werden kann, führt dabei das zuvor beschriebene Verfahren gemäß den zuvor beschriebenen Ausführungsformen aus, so dass im Windparknetz Oberwellen reduziert werden.

Gemäß einer Ausführungsform weist der Windpark ein Parknetz auf und die Transformatoreinrichtung ist dabei vorzugsweise zwischen einer Windenergieanlage und dem Parknetz angeordnet. Vorzugsweise sind mehr Windenergieanlagen in dem Park vorgesehen, als eine der vorgeschlagenen Transformatoreinrichtungen. Bspw. kann eine Windenergieanlage über eine solche Transformatoreinrichtung mit dem Parknetz verbunden sein, um darüber Oberwellen in das Parknetz einzuspeisen, bspw. um im Parknetz dann Oberwellen zu kompensieren, wohingegen eine andere Windenergieanlage bspw. nur über einen üblichen Transformator mit dem Parknetz verbunden ist und daher keine Oberwellen in das Parknetz einspeist.

Die vorliegende Erfindung wird nun nachfolgend exemplarisch anhand von Ausführungsbeispielen unter Bezugnahme auf die begleitenden Figuren näher erläutert.
- Figur 1: zeigt eine Windenergieanlage in einer perspektivischen Darstellung.
- Figur 2: zeigt einen schematischen Aufbau eines Windparks mit einer Transformatorein-richtung.
- Figur 3: zeigt zwei parallel geschaltete Stromquellen.
- Figur 4: zeigt eine Ausführungsform der Transformatoreinrichtung.
- Figur 5: zeigt zwei in Reihe geschaltete Spannungsquellen.
- Figur 6: zeigt eine weitere Ausführungsform der Transformatoreinrichtung mit zusätzlicher Transformatoreinheit.
- Figur 7: zeigt drei unterschiedliche Ausführungsformen eines konstruktiven Aufbaus der Transformatoreinrichtung.

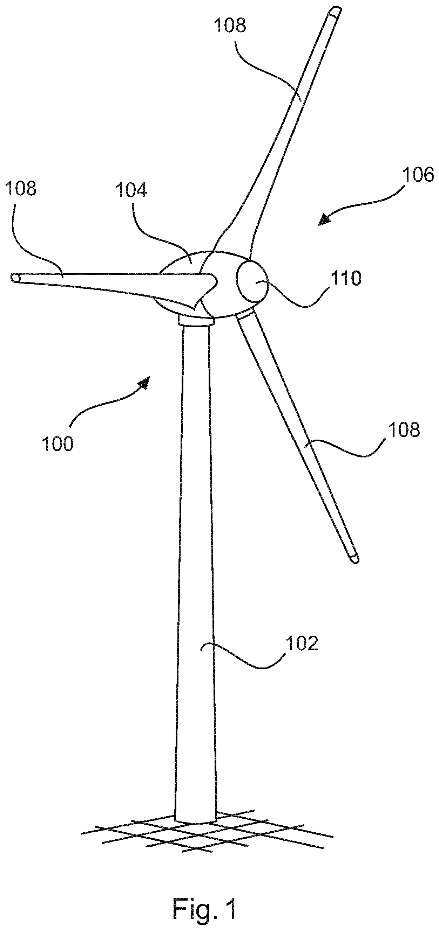

Fig. 1 zeigt eine schematische Darstellung einer Windenergieanlage gemäß der Erfindung. Die Windenergieanlage 100 weist einen Turm 102 und eine Gondel 104 auf dem Turm 102 auf. An der Gondel 104 ist ein aerodynamischer Rotor 106 mit drei Rotorblättern 108 und einem Spinner 110 vorgesehen. Der aerodynamische Rotor 106 wird im Betrieb der Windenergieanlage durch den Wind in eine Drehbewegung versetzt und dreht somit auch einen elektrodynamischen Rotor oder Läufer eines Generators, welcher direkt oder indirekt mit dem aerodynamischen Rotor 106 gekoppelt ist. Der elektrische Generator ist in der Gondel 104 angeordnet und erzeugt elektrische Energie. Die Pitchwinkel der Rotorblätter 108 können durch Pitchmotoren an den Rotorblattwurzeln der jeweiligen Rotorblätter 108 verändert werden.

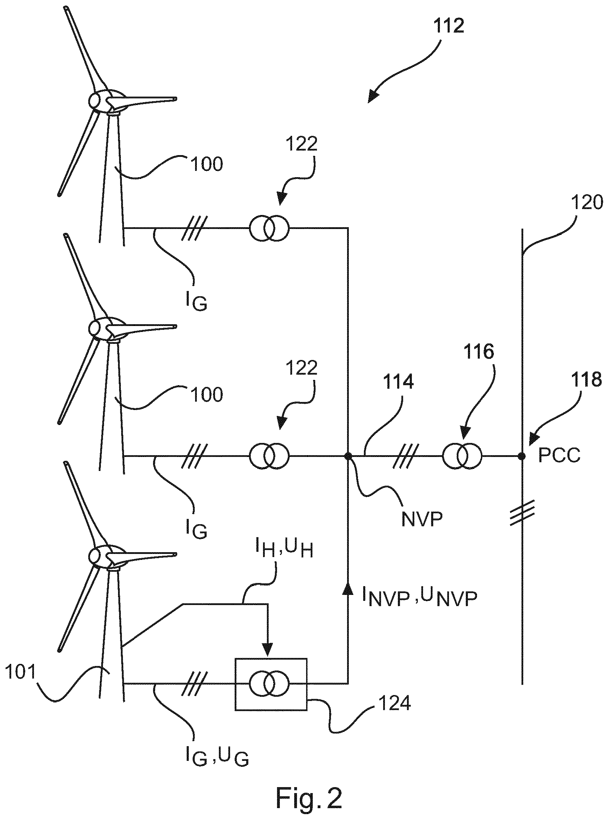

Figur 2 zeigt einen Windpark 112 mit beispielhaft drei Windenergieanlagen 100, 101 die gleich oder verschieden sein können. Die drei Windenergieanlagen 100, 101 stehen somit repräsentativ für im Grunde eine beliebige Anzahl von Windenergieanlagen eines Windparks 112. Die Windenergieanlagen 100, 101 stellen ihre Leistung, nämlich insbesondere den erzeugten Strom über ein elektrisches Parknetz 114 bereit. Dabei werden die jeweils erzeugten Ströme bzw. Leistungen der einzelnen Windenergieanlagen 100, 101 aufaddiert und meist ist ein Transformator 116 vorgesehen, der die Spannung im Park hochtransformiert, um dann an dem Einspeisepunkt 118, der auch allgemein als PCC bezeichnet wird, in das Versorgungsnetz 120 einzuspeisen. Neben dem PCC ist zudem ein Netzverbindungspunkt NVP vorhanden, der hier allgemein einen Anschlusspunkt der Windenergieanlagen 100, 101 an das Parknetz 114 beschreibt. Er steht auch repräsentativ für das gesamte Parknetz. Fig. 2 ist nur eine vereinfachte Darstellung eines Windparks 112, die beispielsweise keine Steuerung zeigt, obwohl natürlich eine Steuerung vorhanden ist. Das Parknetz 114 kann dabei auch beliebig anders gestaltet sein.

In dem gezeigten Windpark 112 in der Figur 2 sind die drei Windenergieanlagen 100, 101 jeweils über einen Transformator 122, 124 mit dem Parknetz 114 elektrisch gekoppelt. Dabei ist die Windenergieanlage 101 im Vergleich zu den Windenergieanlagen 100 über einen Transformator 124 bzw. über eine Transformatoreinrichtung 124 mit dem Parknetz 114 verbunden. In die Transformatoreinrichtung 124 werden die Ströme I_{H} und I_{G} bzw. die Spannungen U_{H} und U_{G} eingegeben. Dabei werden diese Ströme bzw. diese Spannungen als Wechselstrom- bzw. Wechselspannungssignale in die Transformatoreinrichtung 124 eingegeben. Der Strom I_{H} wird dabei als Oberwellenstrom (engl. harmonic current) bezeichnet, da dieser im Wesentlichen einen hochfrequenten Oberwellenanteil aufweist. Er bildet damit ein Oberwellensignal, das in die Transformatoreinrichtung 124 eingegeben wird. Synonym kann der Oberwellenstrom bzw. das Oberwellensignal auch als Kompensationsstrom bezeichnet werden, da dieser zum Kompensieren von Oberwellen vorgesehen ist, z.B. im Windpark 114. Der Strom I_{G} wird dabei als Grundwellenstrom bezeichnet, da dieser im Wesentlichen einen Grundwellenanteil aufweist. Der Grundwellenstrom I_{G} bildet dabei ein erstes Wechselspannungssignal U_{G}.

Allgemein werden in bzw. die Spannung U_{H} und I_{G} bzw. U_{G} getrennt voneinander erzeugt. In dem gezeigten Ausführungsbeispiel in der Figur 2 entstammen beide Ströme zwar der Windenergieanlage 101, diese werden innerhalb der Windenergieanlage jedoch getrennt voneinander erzeugt. Es ist jedoch auch möglich, dass I_{H} auch von einer anderen Stromquelle bzw. einem anderen Erzeuger erzeugt wird, und dazu kommt auch ein aktives Filter in Betracht. Die beliebige andere Stromquelle bzw. der beliebige andere Erzeuger kann dabei auch als Oberwellensignalerzeugungseinheit bezeichnet werden, da diese Einheit den Oberwellenstrom I_{H} erzeugt. Nachdem die beiden genannten Ströme I_{H} und I_{G} erzeugt wurden, werden diese in die Transformatoreinrichtung 124 eingegeben und magnetisch-induktiv zu dem Strom I_{NVP} überlagert. Demnach besteht der überlagerte Strom I_{NVP} aus der Überlagerung des Oberwellenstromanteils von I_{H} sowie dem Grundwellenstromanteil von I_{G} bzw. deren transformierter Signale. Wird der Oberwellenanteil des Stroms in geändert, ändert sich auch der Oberwellenanteil von I_{NVP}. Dabei wird in beliebig von der Oberwellensignalerzeugungseinheit je nach Oberwellenstrombedarf der z.B. im Parknetz vorliegt, erzeugt und somit eingestellt. Somit können auftretende Oberwellen im Windpark 114 mittels der Transformatoreinrichtung 124 im Wesentlichen beliebig eingestellt und reduziert werden. Werden die Spannungen im Windpark 112 betrachtet, erzeugt die Windenergieanlage 101 ein erstes Wechselspannungssignal Uc, dass mit dem Oberwellensignal U_{H} in der Transformatoreinrichtung 124 zu dem zweiten Wechselspannungssignal U_{NVP} transformiert wird. Demnach findet also eine Transformation von U_{G} zu U_{NVP} statt, bei der U_{H} überlagert wird. In dem konkreten Beispiel erzeugt die Windenergieanlage ein Niederspannung-Wechselspannungssignal U_{G} das mittels der Transformatoreinrichtung 124 zu einen Hochspannungs-Wechselspanungssignal U_{NPV} transformiert wird und das Oberwellensignal U_{H} aufgeprägt wird.

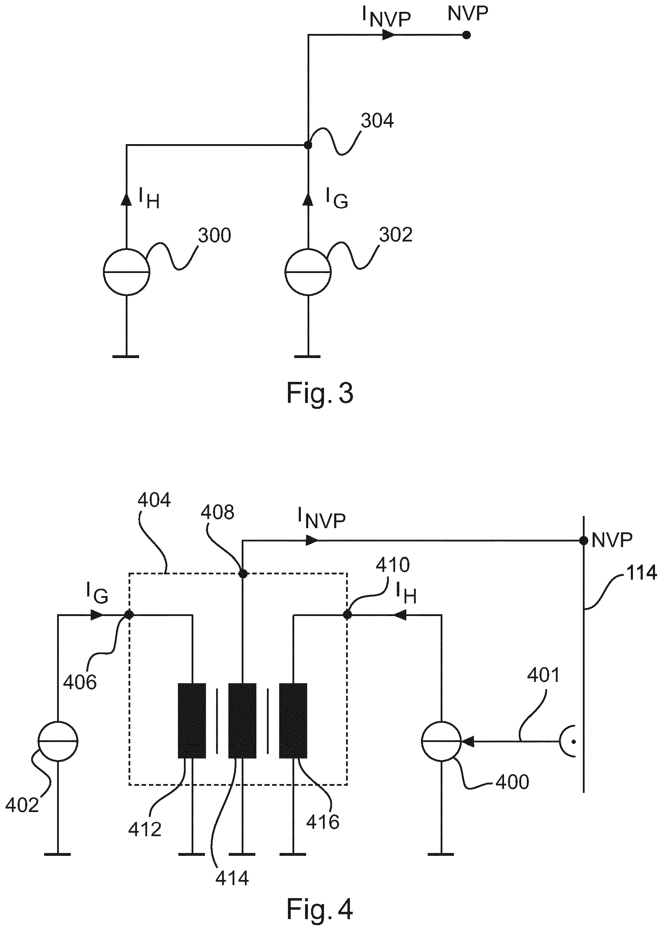

Figur 3 zeigt zwei parallel geschaltete Stromquellen 300 und 302, die das Wirkprinzip der Oberwellenkompensation an einem Netzverbindungpunkt NVP gemäß einer Ausführungsform verdeutlichen sollen. Dabei erzeugt die Stromquelle 300 das Oberwellensignal bzw. Oberwellenstromsignal I_{H}. Das erste Wechselspannungssignal bzw. Grundwellenstromsignal I_{G} wird von der Stromquelle 302 erzeugt.

Das Grundwellenstromsignal I_{G} weist dabei im Wesentlichen einen Grundwellenanteil auf. In dem konkreten Beispiel ist die Stromquelle 302 eine Windenergieanlage, die das Grundwellenstromsignal I_{G} als Wechselstrom mit einem Grundwellenanteil von 50 Hz erzeugt. Idealisierend erzeugt die Stromquelle 302 ein reines Sinussignal als Grundwellenstromsignal bzw. als erstes Wechselspannungssignal.

Die Stromquelle 300, die das Oberwellenstromsignal in erzeugt, ist in dem konkreten Beispiel ein Umrichter in einer Windenergieanlage oder ein aktives Filter, das im Windpark oder in einer Windenergieanlage implementiert ist. Der Oberwellenstrom I_{H} weist dabei im Wesentlichen einen Oberwellenanteil auf. In dem konkreten Beispiel ist die Stromquelle 300 ein Umrichter einer Windenergieanlage. Dieser erzeugt das Oberwellenstromsignal I_{H} als Wechselstrom mit einem Oberwellenanteil von 150Hz, 350Hz, 650Hz, demnach also als Vielfaches des Grundwellenanteils. Die zuvor beschriebenen Beispielfrequenzen beziehen sich dabei auf Oberwellenanteile der 3.-, 7.- und 13.-Harmonischen Schwingung, wobei als Grundfrequenz 50 Hz angenommen wird. Es kommen aber auch andere Oberwellenanteile in Betracht.

An dem Verbindungspunkt 304 werden die beiden erzeugten Stromsignale überlagert. Demnach überlagern sich an dem Punkt 304 die beiden Stromsignale I_{H} und I_{G} mit ihrem jeweiligen Grund- und Oberwellenanteil zu dem Überlagerungsstromsignal I_{NVP}. Dieses Überlagerungsstromsignal weist folglich den Grund- sowie den Oberwellenanteil auf. Das so erzeugte Überlagerungsstromsignal I_{NVP} wird dann an einem Netzverbindungpunkt NVP in ein Windparknetz oder in einen beliebigen anderen Netzabschnitt in einem Versorgungsnetz eingespeist. So kann das Überlagerungsstromsignal I_{NVP} mit einem beliebigen Oberwellenanteil erzeugt werden. Dies kann genutzt werden, um beispielsweise Oberwellen in einem Windpark oder in einem Netzabschnitt im Versorgungsnetz zu reduzieren, wenn die erzeugten Oberwellenanteile des Überlagerungsstromsignals I_{NVP} den Oberwellenanteilen im Windpark oder in einem Netzabschnitt entgegenwirken bzw. entgegenwirkend eingestellt werden.

Figur 4 zeigt eine Ausführungsform der Transformatoreinrichtung 404. Die Transformatoreinrichtung 404 weist dabei drei Anschlüsse auf, nämlich den Grundwellenanschluss 406, den Überlagerungsanschluss 408 sowie den Oberwellenanschluss 410. An den Grundwellenanschluss 406 ist die Stromquelle 402 elektrisch angeschlossen, die das Grundwellenstromsignal I_{G} erzeugt. An den Oberwellenanschluss 410 ist die Stromquelle 400 elektrisch angeschlossen, die das Oberwellenstromsignal I_{H} erzeugt. Dabei erzeugt die Stromquelle 400 das Oberwellenstromsignal I_{H}, die synonym auch als Oberwellensignalerzeugungseinheit bezeichnet werden kann, in Abhängigkeit eines gemessenen Oberwellenanteils im Parknetz 114. Dafür sind Messmittel vorgesehen, um einen Oberwellenbedarf im Parknetz zu erfassen. Dieses Messmittel kann auch eine Logik zum Auswerten des gemessenen Messsignals umfassen. Die so erfassten Messwerte werden über einen geeigneten Signalweg 401 an die Stromquelle 400 übermittelt. Als Signalweg 401 sind übliche Implementierungen vorgesehen, wie Signalleitungen, Glasfaserkabel, oder beliebige Funkverbindungen. Somit wird das Oberwellensignal in in Abhängigkeit eines gemessenen Oberwellenanteils erzeugt und an den Oberwellenanschluss 410 angelegt. Dazu ist die Stromquelle 400 mit dem Oberwellenanschluss 410 elektrisch verbunden, beispielsweise über eine elektrische Leitung. Als dritten Anschluss weist die Transformatoreinrichtung 404 den Überlagerungsanschluss 408 zum Abgeben des Überlagerungsstromsignals I_{NVP} auf.

Figur 4 erläutert die Überlagerung in einem Ersatzschaltbild mit Bezugnahme auf Ströme. Dabei wird aber auch ein erstes Wechselspannungssignal U_{G} mit einem Grundwellenanteil mittels der Quelle 402 erzeugt und an den Grundwellenanschluss 406 angelegt. Zudem erzeugt die Quelle 400 ein Oberwellensignal U_{H} mit einem Oberwellenanteil in Abhängigkeit des gemessenen Oberwellenanteils des Windparks. Das so erzeugte Oberwellensignal wird an den Oberwellenanschluss 410 angelegt. Außerdem wird das zweite Wechselspannungssignal U_{NVP} am Überlagerungsanschluss 408 von der Transformatoreinrichtung 404 zum Netzverbindungspunkt abgegeben.

Innerhalb der Transformatoreinrichtung 404, die mit der gestrichelten Linie angedeutet ist, wird eine Transformation des Stromsignals I_{G} zum Stromsignal I_{NVP} durchgeführt, in dem das Grundwellensignal I_{G} magnetisch-induktiv mit dem Oberwellensignal I_{H} überlagert wird. Für die Transformation sind drei Wicklungen in der Transformatoreinrichtung 404 vorgesehen, nämlich die Primärgrundwicklung 412, die Sekundärgrundwicklung 414 sowie die Oberwellenwicklung 416. Zur Vereinfachung der Darstellung sind die zuvor genannten Wicklungen als gekoppelte Induktivitäten dargestellt, wie es bei dem Schaltsymbol eines Transformators üblich ist. Das an den Grundwellenanschluss 406 eingegebene Grundwellenstromsignal I_{G} wird somit von der Primärgrundwicklung 412 in die Sekundärgrundwicklung 414 magnetisch induziert. Je nach Wicklungsverhältnis ü wird somit eine Transformation bzw. Wandlung von I_{G} von der Primärgrundwicklung 412 zur Sekundärgrundwicklung 414 durchgeführt. Neben der Transformation von der Primärgrundwicklung 412 zur Sekundärgrundwicklung 414 wird zusätzlich auch eine Transformation von der Oberwellenwicklung 416 zur Sekundärgrundwicklung 414 durchgeführt. Somit wird das Oberwellensignal in ebenfalls in die Sekundärgrundwicklung 414 magnetisch induziert und je nach Übersetzungsverhältnis, das sich von dem Übersetzungsverhältnis zur Primärgrundwicklung unterscheiden kann, von der Oberwellenwicklung 416 zur Sekundärgrundwicklung 414 transformiert.

Durch die beiden genannten Transformationen wird somit das Überlagerungsstromsignal I_{NVP} erzeugt, das am Übertragungsanschluss 408 abgegeben wird. So wird erreicht, dass das Überlagerungsstromsignal I_{NVP} sowohl den Grundwellenanteil als auch einen möglichst ungedämpften und damit möglichst unverzerrten Oberwellenanteil aufweist. Erneut wird darauf hingewiesen, dass die zuvor angeführten Erläuterungen, ebenso die Spannungen betreffen. Demnach wird ein erstes Wechselspannungssignal U_{G} an den Grundwellenanschluss 406 angelegt, dass anschließend von der Primärgrundwicklung 412 zur Sekundärgrundwicklung 414 transformiert wird. Gleichzeitig wird das Oberwellenwicklung U_{H} an den Oberwellenanschluss 410 angelegt dass anschließend von der Oberwellenwicklung 416 zur Sekundärgrundwicklung 414 transformiert wird. So wird das zweite Wechselspannungssignal U_{NVP} mittels der Transformatoreinrichtung 404 erzeugt, dass dann am Übertragungsanschluss 408 abgegeben wird.

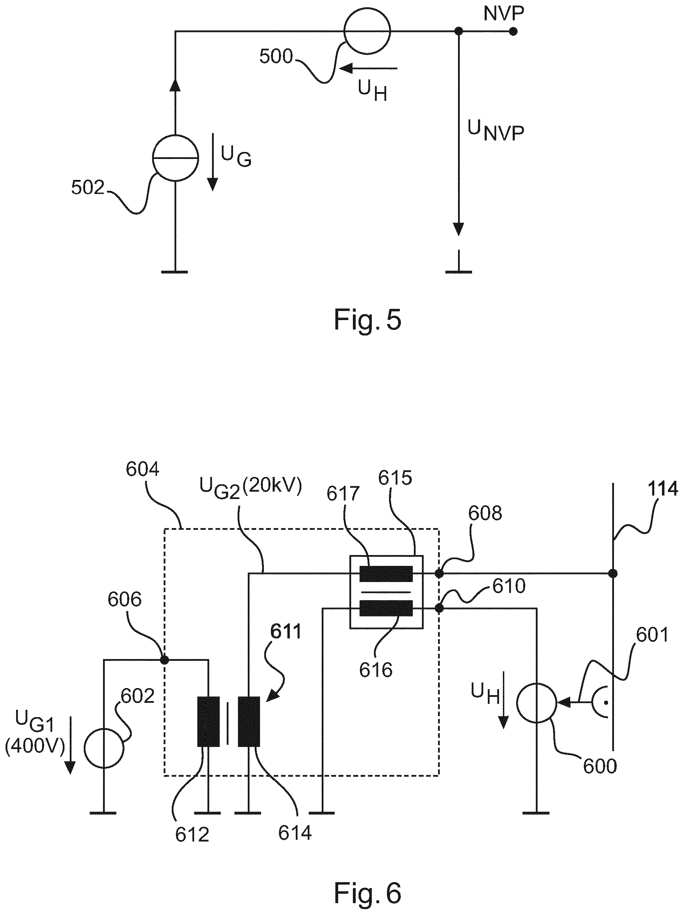

Figur 5 zeigt zwei in Reihe geschaltet Spannungsquellen 500 und 502. Dabei erzeugt die Spannungsquelle 500 das Wechselspannungssignal U_{H} und die Spannungsquelle 502 das Wechselspannungssignal U_{G}. Äquivalent zur Figur 3 veranschaulicht die Reihenschaltung der beiden Spannungsquellen, das Grundprinzip der Oberwellenkompensation mittels zweier Spannungsquellen. Die Spannungsquelle 502 kann als ein konkretes Beispiel ein Wechselrichter einer Windenergieanlage sein, der das Wechselspannungssignal U_{G} mit einer Grundfrequenz von 50 Hz erzeugt. Demnach ist die Grundfrequenz des Wechselspannungssignals U_{G} als Grundwellenanteil des ersten Wechselspannungssignals zu verstehen. Die Spannungsquelle 500 erzeugt das Oberwellensignal U_{H} ebenfalls als ein Wechselspannungssignal, das beispielsweise Frequenzen aufweist, die ein Vielfaches der Grundfrequenz sind (150Hz, 350Hz, 650Hz). Da sich die Spannungen der in Reihe geschalteten Spannungsquellen 500, 502 addieren, liegt am NVP die überlagerte Spannung U_{NVP} vor, die sowohl den Grundwellenanteil als auch den Oberwellenanteil aufweist.

Figur 6 zeigt eine weitere Ausführungsform einer Transformatoreinrichtung 604. Dabei weist die Transformatoreinrichtung 604 äquivalent zu der Figur 4 einen Grundwellenanschluss 606, einen Überlagerungsanschluss 608 sowie einen Oberwellenanschluss 610 auf. An den Grundwellenanschluss 606 wird niederspannungsseitig an der Primärseite der Transformatoreinrichtung das erste Wechselspannungssignal U_{G1} angelegt, dass mit der Spannungsquelle 602 erzeugt wird. Im gezeigten Beispiel wird das erste Wechselspannungssignal U_{G1} mit einer Amplitude von 400 V erzeugt. An den Oberwellenanschluss 610 wird das Oberwellensignal U_{H} angelegt, das mit der Spannungsquelle 600 in Abhängigkeit des gemessenen Oberwellenbedarfs im Windpark 114 erzeugt wird. Dieser Oberwellenbedarf wird mit Messmittel erfasst und über den Signalweg 601 an die Spannungsquelle 600 übermittelt. Das zweite Wechselspannungssignal das mittels der Transformatoreinrichtung 604 erzeugt wird, wird dabei am Überlagerungsanschluss 608 abgegeben.

Im Vergleich zu der in der Figur 4 beschriebenen Ausführungsform ist in der Ausführungsform der Transformatoreinrichtung 604 der Figur 6 die Oberwellenwicklung 616 räumlich getrennt von der Primärgrundwicklung 612 und der Sekundärgrundwicklung 614 in einer zusätzlichen Transformatoreinheit 615 ausgebildet. In diesem Ausführungsbeispiel kann ein üblicher Transformator 611 zur Transformation des ersten Wechselspannungssignals U_{G1} mit dem Grundwellenanteil zu einem zweiten Wechselspannungsgrundsignal, nämlich dem transformierten Wechselspannungssignal U_{G2} genutzt werden, um U_{G1} in einen höheren Spannungsbereich zu transformieren. Im gezeigten Beispiel entspricht U_{G1} einer Spannung von 400 V und U_{G2} einer Spannung von 20 kV, also einer Hochspannung bzw. einer Spannung im Mittelspannungsbereich. Dabei weist die Spannung U_{G2} zunächst keinen signifikanten Oberwellenanteil auf.

Der Oberwellenanteil wird dann mittels der Transformatoreinheit 615 in das Hochspannungssignal U_{G2} eingekoppelt. Dazu ist eine geeignete Transformatoreinheit 615 vorgesehen, die einen Oberwellenanschluss 610 sowie einen Überlagerungsanschluss 608 aufweist. Dabei wird äquivalent zu den zuvor beschriebenen Ausführungsformen das Oberwellensignal U_{H} erzeugt, das mittels der Transformatoreinheit 615 mit dem Spannungssignal U_{G2} magnetisch-induktiv überlagert wird. Dabei wird in dem Ausführungsbeispiel der Figur 6 ein Herabtransformieren von U_{H} vorgenommen. Beispielsweise wird das Oberwellensignal U_{H}, das in der Spannungsquelle 600 erzeugt wird, mit einer Amplitude von 400 V erzeugt. Durch das in der Transformatoreinheit 615 eingestellte Wicklungsverhältnis der Oberwellenwicklung 616 zu der Wicklung 617 wird beispielsweise U_{H} mit einer Spannungsamplitude von 20 V in das Hochspannungssignal U_{G2} eingekoppelt. Da Oberwellen selbst im Hochspannungsbereich relativ geringe Oberwellenamplituden aufweisen, kann es ausreichend sein, das Oberwellensignal mit einer geringen Amplitude auf der Hochspannungsseite der Transformatoreinrichtung zu überlagern. Das so überlagerte Oberwellensignal wird hier dem Wechselspannungsgrundsignal im Grunde aufmoduliert.

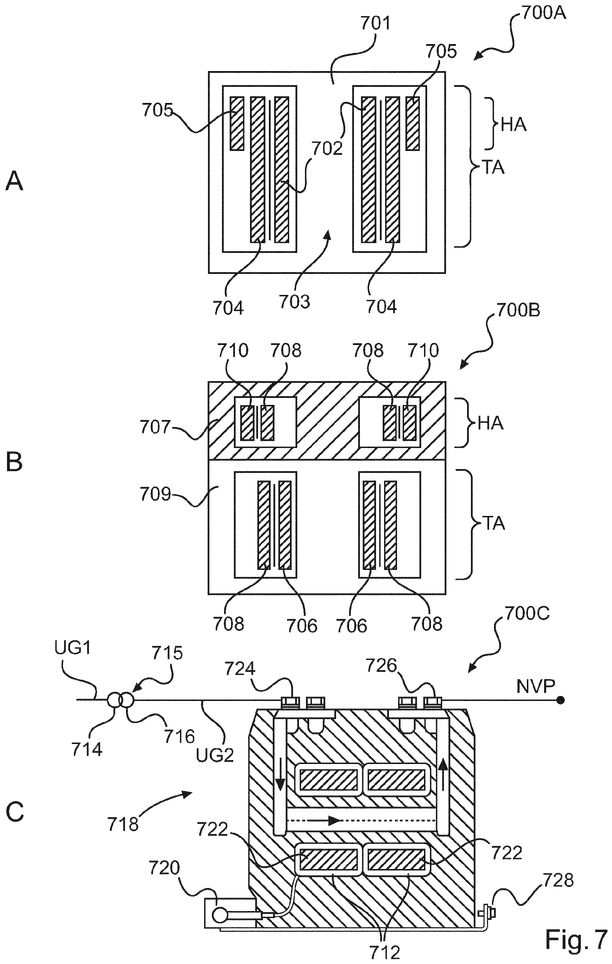

Figur 7 zeigt drei unterschiedlichen Ausführungsformen A, B, C eines konstruktiven Aufbaus der der erfindungsgemäßen Transformatoreinrichtung.

In der Variante A ist die Transformatoreinrichtung 700A mit nur einem Magnetkern 701 ausgebildet. Der Magnetkern 701 ist dabei mit den drei Wicklungen, nämlich einer Primärgrundwicklung 702, einer Sekundärgrundwicklung 704 sowie einer Oberwellenwicklung 705 bewickelt, bzw. der wenigstens ein Schenkel 703 des Transformatorkerns ist mit den genannten Wicklungen bewickelt. Bei einem 3-phasigen Transformator wären entsprechend drei Schenkel des Transformators mit jeweils den genannten Wicklungen einzeln und getrennt bewickelt, so dass drei Überlagerungsanschlüsse, drei Oberwellenanschlüsse und drei Grundwellenanschlüsse vorhanden sind. Dabei ist die Transformatoreinrichtung 700A so aufgebaut, dass in einem Transformationsbereich TA (engl. transformation area) eine Spannungs- bzw. eine Stromtransformation von der Primärgrundwicklung zu der Sekundärgrundwicklung stattfindet. Unter Berücksichtigung der Ausführungsbeispiele aus den Figuren 2 bis 6 wird im Transformationsbereich TA also das erste Wechselspannungssignal mit einem Grundwellenanteil in den Hochspannungsbereich transformiert, zumindest wenn das Übersetzungsverhältnis von der Primärgrundwicklung zur Sekundärgrundwicklung für eine solche Transformation eingestellt ist.

Neben dem Transformationsbereich ist zudem ein Oberwellenüberlagerungsbereich HA (engl. harmonic area) vorgesehen, der einen räumlichen Bereich beschreibt, in dem die Überlagerung von dem Oberwellensignal mit dem transformierten ersten Wechselspannungssignal stattfindet. Im Oberwellenüberlagerungsbereich wird also eine Oberwelle bzw. mehrerer Oberwellen überlagert. In der Variante A sind der Transformationsbereich TA und der Oberwellenüberlagerungsbereich HA überlappend ausgebildet. Dazu sind die drei Wicklungen in einer radialen Richtung nach außen übereinander angeordnet, wobei die Oberwellenwicklung 705 zur Sekundärgrundwicklung 704 benachbart ausgebildet ist. Demnach liegt eine Schichtfolge der Wicklungen Primärgrundwicklung 702, Sekundärgrundwicklung 704, Oberwellenwicklung 705 vor, wenn der Schenkel 703 der Transformatoreinrichtung 700A als Bezugsmittelpunkt ausgewählt wird.

In der Variante B ist die Transformatoreinrichtung 700B mit einem Hauptkern 709 und einem Nebenkern 707 ausgebildet, wobei der Nebenkern als Hochfrequenzkern ausgebildet ist. Äquivalent zur Variante A weist auch die Variante B eine Primärgrundwicklung 706, eine Sekundärgrundwicklung 708 sowie eine Oberwellenwicklung 710 auf. In der gezeigten Variante B sind der Transformationsbereich TA und der Oberwellenüberlagerungsbereich HA nebeneinander ausgebildet. Dabei sind im Hauptkern 709 nur die Primärgrundwicklung 706 und die Sekundärgrundwicklung 708 angeordnet.

Im Nebenkern 707 sind dahingegen die Sekundärgrundwicklung 708 und die Oberwellenwicklung 710 angeordnet. Durch die Verwendung eines Nebenkerns als Hochfrequenzkern, der mit einem geeigneten Kernmaterial ausgebildet ist, können die Oberwellen im Oberwellenüberlagerungsbereich HA mit einer noch geringeren Dämpfung in die Sekundärgrundwicklung 708 magnetisch induziert werden.

Die Varianten A und B beziehen sich somit jeweils auf eine konkrete Umsetzung der Ausführungsform die in den Figuren 3 und 4 gezeigt ist, also dass die Oberwellenwicklung nicht räumlich getrennt von den beiden Grundwicklungen ausgebildet ist.

In der Variante C ist die Transformatoreinrichtung 700C so aufgebaut, dass die Oberwellenwicklung 712 räumlich getrennt von der Primärgrundwicklung 714 sowie der Sekundärgrundwicklung 716 ausgebildet ist. Dabei ist in der Variante C gezeigt, dass die beiden Grundwicklungen 714, 716 in einem Transformator 715 angeordnet sind, der einer Transformatoreinheit 718 vorgeschalteten ist. Somit wird mit dem Transformator 715, der die beiden genannten Grundwicklungen 714 und 716 umfasst, das Niederspannungs-Wechselspannungssignal U_{G1} in den Hochspannungsbereich zu dem Hochspannung-Wechselspannungssignal U_{G2} hochtransformiert. Die Transformatoreinheit 718 ist also in Serie zu dem Transformator 715 in einem Verbindungsabschnitt des Strompfades zum Netzverbindungpunkt NVP angeordnet und bildet so die Transformatoreinrichtung 700C aus.

Dabei weist die Transformatoreinheit 718 einen Oberwellenanschluss 720 auf, der mit der Oberwellenwicklung 712 elektrisch verbunden ist, wobei die Oberwellenwicklung 712 zudem um einen Magnetkern 722 gewickelt ist, der als Ringkern ausgeführt ist. Zudem weist die Transformatoreinheit 718 einen Zwischenanschluss 724 und einen Überlagerungsanschluss 726 auf. An den Zwischenanschluss 724 ist ein Leitungsabschnitt angeschlossen, der mit der Sekundärgrundwicklung 716 des Transformators 715 elektrisch verbunden ist. An den Überlagerungsanschluss 726 wird ein Leitungsabschnitt angeschlossen, der die Transformatoreinheit 718 mit dem Netzverbindungpunkt NVP elektrisch verbindet. Zudem weist die Transformatoreinheit 718 einen Erdungsanschluss 728 auf. Demnach ist die Transformatoreinheit dazu vorbereitet, dass an den Oberwellenanschluss 720 das Oberwellensignal eingegeben werden kann. Wird ein Oberwellensignal in die Transformatoreinheit 718 eingegeben, wird das Oberwellensignal magnetisch in den mit den Pfeilen angedeuteten Strompfad induziert. Da die Wicklungsanzahl des mit den Pfeilen angedeuteten Strompfads der Wicklungsanzahl n=1 entspricht, findet eine Herabtransformation innerhalb der Transformatoreinheit 718 statt, wenn die Wicklungsanzahl der Oberwellenwicklung 712 größer ist als eine Wicklungszahl von 1. Demnach wird in einem konkreten Beispiel, dass Oberwellensignal mit einer Spannung von 400V erzeugt, in der Transformatoreinheit 715 zu 20V herabtransformiert und dann mit dem Hochspannungssignal U_{G2} magnetisch-induktiv überlagert.

## Patentansprüche

1. Transformatoreinrichtung (124) zum Transformieren eines ersten Wechselspannungssignals in ein zweites Wechselspannungssignal zum Einspeisen in ein elektrisches Versorgungsnetz (120), und die Transformatoreinrichtung umfasst,
- einen primärseitigen Grundwellenanschluss (406) zum Eingeben des ersten Wechselspannungssignals, wobei das erste Wechselspannungssignal im Wesentlichen einen Grundwellenanteil aufweist bzw. ist,
- einen primärseitigen Oberwellenanschluss (410) zum Eingeben wenigstens eines elektrischen Oberwellensignals, wobei das Oberwellensignal im Wesentlichen einen Oberwellenanteil aufweist,
- einen sekundärseitigen Überlagerungsanschluss (408) zum Abgeben des zweiten Wechselspannungssignals, wobei das zweite Wechselspannungssignal im Wesentlichen den in seiner Spannung transformierten Grundwellenanteil und den in seiner Spannung transformierten Oberwellenanteil aufweist, und
- wenigstens einen bewickelten magnetischen Kern zum Transformieren und nichtgalvanischen Überlagern des Grundwellenanteils und des Oberwellenanteils zum zweiten Wechselspannungssignal, wobei an den Überlagerungsanschluss ein Windparknetz oder ein Netzabschnitt des elektrischen Versorgungsnetzes angeschlossen ist, so dass das gemeinsame Signal mit dem überlagerten, möglichst ungedämpften Oberwellenanteil zusammen mit dem Grundwellenanteil im Windpark oder in dem Netzabschnitt angelegt bzw. eingespeist wird.

2. Transformatoreinrichtung (124) nach Anspruch 1,
**dadurch gekennzeichnet, dass**
- der wenigstens eine magnetische Kern, oder wenigstens einer davon einen Oberwellenüberlagerungsbereich (HA) zum separaten Einkoppeln des Oberwellenanteils aufweist, wobei
- der Oberwellenüberlagerungsbereich mit wenigstens einer Oberwellenwicklung (705, 710, 712) bewickelt ist, die mit dem Oberwellenanschluss elektrisch gekoppelt ist, um das elektrische Oberwellensignal in ein magnetisches Oberwellensignal in dem Oberwellenüberlagerungsbereich zu transformieren und mit dem Grundwellenanteil zu überlagern.

3. Transformatoreinrichtung nach Anspruch 1 oder 2,
**dadurch gekennzeichnet, dass** der wenigstens eine magnetische Kern
- einen magnetischen Transformationsbereich (TA) zum Transformieren des ersten Wechselspannungssignals in das zweites Wechselspannungssignal aufweist, wobei
- der Transformationsbereich
- mit einer Primärgrundwicklung (702, 706, 714) bewickelt ist, die mit dem Grundwellenanschluss elektrisch gekoppelt ist, und
- mit einer Sekundärgrundwicklung (704, 708, 716) bewickelt ist, die mit dem Überlagerungsanschluss elektrisch gekoppelt ist, und wobei
- eine bzw. die Oberwellenwicklung im Wesentlichen zur Sekundärwicklung benachbart angeordneten ist, insbesondere um das elektrische Oberwellensignal in ein magnetisches Oberwellensignal in dem Oberwellenüberlagerungsbereich zu transformieren und mit dem Grundwellenanteil zu überlagern.

4. Transformatoreinrichtung (124) nach Anspruch 3,
**dadurch gekennzeichnet, dass**
- der Transformationsbereich (TA) und der Oberwellenüberlagerungsbereich (HA) überlappend ausgebildet sind, insbesondere so dass in einem Überlappungsabschnitt des magnetischen Kerns die Primärgrundwicklung (702), die Sekundärgrundwicklung (704) und die Oberwellenwicklung (705) in radialer Richtung in Lagen übereinander um den magnetischen Kern gewickelt sind, und/oder dass die Oberwellenwicklung (705) im Wesentlichen zur Sekundärgrundwicklung (704) benachbart angeordneten ist.

5. Transformatoreinrichtung (124) nach einem der vorstehenden Ansprüche, **dadurch gekennzeichnet, dass**
- der wenigstens eine magnetische Kern in einen Hauptkern (709) und einen Nebenkern (707) aufgeteilt ist, wobei
- der Hauptkern mit der Primärgrundwicklung (706) und einer Sekundärgrundwicklung (708) bewickelt ist, zum Transformieren des ersten Wechselspannungssignals in ein zweites Wechselspannungsgrundsignal, wobei das zweite Wechselspannungsgrundsignal an einer sekundärseitigen Grundleitung ausgegeben wird, und
- der Nebenkern (707) mit einer bzw. der Oberwellenwicklung (710) bewickelt ist und mit der sekundärseiteigen Grundleitung magnetisch gekoppelt ist, um den Oberwellenanteil zu transformieren und dem zweiten Wechselspannungsgrundsignal zum zweiten Wechselspannungssignal zu überlagern.

6. Transformatoreinrichtung (124) nach Anspruch 5,
**dadurch gekennzeichnet, dass**
- der Nebenkern (707) als Hochfrequenztransformatorkern ausgebildet ist.

7. Transformatoreinrichtung (124) nach einem der vorstehenden Ansprüche,
**dadurch gekennzeichnet, dass**
- das wenigstens eine elektrische Oberwellensignal zum Eingeben an den primärseitigen Oberwellenanschluss (410, 610, 720) mittels einer Oberwellensignalerzeugungseinheit (400, 600) erzeugt wird, insbesondere mit einem Hochfrequenzumrichter und/oder mit einem aktiven Filter erzeugt wird.

8. Transformatoreinrichtung (124) nach Anspruch 7,
**dadurch gekennzeichnet dass**,
- ein Messmittel zum Erfassen des sekundärseitigen zweiten Wechselspannungssignals vorgesehen ist, und dass
- ein Signalweg (401, 601) vorgesehen ist, um das erfasste Signal darüber an die Oberwellensignalerzeugungseinheit zu übertragen, wobei die Transformatoreinrichtung dazu vorbereitet ist, das Oberwellensignal in Abhängigkeit des durch das Messmittel erfassten Signals zu erzeugen.

9. Transformatoreinrichtung (124) nach einem der vorstehenden Ansprüche, **dadurch gekennzeichnet, dass**
- die Transformatoreinrichtung, insbesondere der Oberwellenanschluss (720), dazu vorbereitet ist, dass das Oberwellensignal als Oberspannungssignal am Oberwellenanschluss eingegeben wird, um das transformierte Oberspannungssignal dem transformierten Grundwellenanteil, nämlich dem zweiten Wechselspannungsgrundsignal zu überlagern, wobei insbesondere
- eine zusätzliche Transformatoreinheit vorgesehen ist, um das am Oberwellenanschluss eingegebene Oberspannungssignal zum Überlagern herunterzutransformieren, und wobei vorzugsweise
- die Transformatoreinrichtung dazu vorgesehen ist, das Oberspannungssignal in Abhängigkeit eines erfassten Oberwellenstrombedarfs zu erzeugen, insbesondere mittels der Oberwellensignalerzeugungseinheit (400, 600) zu erzeugen.

10. Windenergieanlage (101) zum Erzeugen elektrischer Leistung aus Wind zum Einspeisen in ein elektrisches Versorgungsnetz,
**dadurch gekennzeichnet, dass**
- die Windenergieanlage über wenigstens eine Transformatoreinrichtung nach einem der Ansprüche 1 bis 9 mit dem elektrischen Netz verbunden ist.

11. Windpark (112) zum Erzeugen elektrischer Leistung aus Wind zum Einspeisen in ein elektrisches Versorgungsnetz,
**dadurch gekennzeichnet, dass**
- der Windpark wenigstens eine Windenergieanlage (101) nach Anspruch 102 aufweist und/oder
- dass er eine Transformatoreinrichtung (124) nach einem der Ansprüche 1 bis 9 aufweist.

12. Verfahren zum Transformieren eines ersten Wechselspannungssignals in ein zweites Wechselspannungssignal zum Einspeisen in ein elektrisches Versorgungsnetz, umfassen die Schritte:
- Eingeben des ersten Wechselspannungssignals in einen primärseitigen Grundwellenanschluss (406), wobei das erste Wechselspannungssignal im Wesentlichen einen Grundwellenanteil aufweist oder ein Grundwellenanteil ist,
- Eingeben wenigstens eines elektrischen Oberwellensignals in einen primärseitigen Oberwellenanschluss (410), wobei das Oberwellensignal im Wesentlichen einen Oberwellenanteil aufweist,
- Abgeben des zweiten Wechselspannungssignals aus einem sekundärseitigen Überlagerungsanschluss (408), wobei das zweite Wechselspannungssignal im Wesentlichen den in seiner Spannung transformierten Grundwellenanteil und den in seiner Spannung transformierten Oberwellenanteil aufweist, und
- Transformieren und nichtgalvanisches Überlagern des Grundwellenanteils und des möglichst ungedämpften Oberwellenanteils zum zweiten Wechselspannungssignal mit wenigstens einem magnetischen Kern, um Oberwellen in einem Netzabschnitt anzupassen, insbesondere zu reduzieren, der mit dem sekundärseitigen Überlagerungsanschluss elektrisch verbunden ist.

13. Verfahren nach Anspruch 12,
**dadurch gekennzeichnet, dass**
eine Transformatoreinrichtung (124) nach einem der Ansprüche 1 bis 9 zum Ausführen des Verfahrens verwendet wird.

## Claims

1. Transformer device (124) for transforming a first alternating voltage signal into a second alternating voltage signal for feeding into an electrical power supply network (120) and the transformer device comprises
- a primary-side fundamental wave connection (406) for inputting the first alternating voltage signal, wherein the first alternating voltage signal substantially has or is a fundamental wave portion,
- a primary-side harmonic connection (410) for inputting at least one electrical harmonic signal, wherein the harmonic signal substantially has a harmonic portion,
- a secondary-side superimposition connection (408) for emitting the second alternating voltage signal, wherein the second alternating voltage signal substantially has the fundamental wave portion which has been transformed in terms of the voltage thereof and the harmonic portion which has been transformed in terms of the voltage thereof, and
- at least one wound magnetic core for transformation and non-galvanic superimposition of the fundamental wave portion and the harmonic portion to form the second alternating voltage signal, wherein a wind park network or a network portion of the electrical power supply network is connected to the superimposition connection so that the common signal with the superimposed harmonic portion which is non-damped as far as possible together with the fundamental wave portion is applied or fed in the wind park or in the network portion.

2. Transformer device (124) according to claim 1, **characterised in that**
- the at least one magnetic core or at least one of them has a harmonic superimposition region (HA) for separate coupling of the harmonic portion, wherein
- the harmonic superimposition region is wound with at least one harmonic winding (705, 710, 712) which is electrically coupled to the harmonic connection in order to transform the electrical harmonic signal into a magnetic harmonic signal in the harmonic superimposition region and to superimpose it with the fundamental wave portion.

3. Transformer device according to claim 1 or 2, **characterised in that** the at least one magnetic core has
- a magnetic transformation region (TA) for transforming the first alternating voltage signal into the second alternating voltage signal, wherein
- the transformation region
- is wound with a primary base winding (702, 706, 714) which is electrically coupled to the fundamental wave connection, and
- is wound with a secondary winding (704, 708, 716) which is electrically coupled to the superimposition connection, and wherein
- a or the harmonic winding is arranged substantially adjacent to the secondary winding, in particular in order to transform the electrical harmonic signal into a magnetic harmonic signal in the harmonic superimposition region and to superimpose it with the fundamental wave portion.

4. Transformer device (124) according to claim 3, **characterised in that**
- the transformation region (TA) and the harmonic superimposition region (HA) are constructed to overlap, in particular so that in an overlapping portion of the magnetic core the primary base winding (702), the secondary base winding (704) and the harmonic winding (705) are wound in a radial direction in layers one above the other around the magnetic core,
and/or **in that** the harmonic winding (705) is arranged substantially adjacent to the secondary winding (704).

5. Transformer device (124) according to any one of the preceding claims, **characterised in that**
- the at least one magnetic core is divided into a main core (709) and an auxiliary core (707), wherein
- the main core is wound with the primary base winding (706) and a secondary base winding (708) in order to transform the first alternating voltage signal into a second alternating voltage basic signal, wherein the second alternating voltage basic signal is output to a secondary-side basic line, and
- the auxiliary core (707) is wound with a or the harmonic winding (710) and is magnetically coupled to the secondary-side basic line in order to transform the harmonic portion and to superimpose it on the second alternating voltage basic signal for the second alternating voltage signal.

6. Transformer device (124) according to claim 5, **characterised in that**
- the auxiliary core (707) is in the form of a high-frequency transformer core.

7. Transformer device (124) according to any one of the preceding claims,
**characterised in that**
- the at least one electrical harmonic wave signal is produced for inputting at the primary-side harmonic wave connection (410, 610, 720) by means of a harmonic wave signal generation unit (400, 600), in particular produced with a high-frequency converter and/or with an active filter.

8. Transformer device (124) according to claim 7, **characterised in that**
- a measurement means is provided for detecting the secondary-side second alternating voltage signal, and **in that**
- a signal path (401, 601) is provided in order thereby to transfer the signal detected to the harmonic wave signal generation unit, wherein the transformer device is prepared to produce the harmonic wave signal in accordance with the signal detected by the measurement means.

9. Transformer device (124) according to any one of the preceding claims,
**characterised in that**
- the transformer device, in particular the harmonic wave connection (720), is prepared so that the harmonic signal is input as a high-voltage signal at the harmonic wave connection in order to superimpose the transformed high-voltage signal onto the transformed fundamental wave portion, that is to say, the second alternating voltage basic signal, wherein in particular
- an additional transformer unit is provided in order to step-down the high-voltage signal which has been input at the harmonic wave connection for superimposition, and wherein preferably
- the transformer device is provided to produce the high-voltage signal in accordance with a detected harmonic wave current requirement, in particular by means of the harmonic wave signal generation unit (400, 600).

10. Wind turbine (101) for producing electrical power from wind for feeding into an electrical power supply network, **characterised in that**
- the wind turbine is connected to the electrical network by means of at least one transformer device according to any one of claims 1 to 9.

11. Wind park (112) for producing electrical power from wind for feeding into an electrical power supply network, **characterised in that**
- the wind park has at least one wind turbine (101) according to claim 10, and/or
- **in that** it has a transformer device (124) according to any one of claims 1 to 9.

12. Method for transforming a first alternating voltage signal into a second alternating voltage signal for feeding into an electrical power supply network,
comprising the steps of:
- inputting the first alternating voltage signal into a primary-side fundamental wave connection (406), wherein the first alternating voltage signal substantially has a fundamental wave portion or is a fundamental wave portion,
- inputting at least one electrical harmonic wave signal into a primary-side harmonic wave connection (410), wherein the harmonic wave signal substantially has a harmonic wave portion,
- outputting the second alternating voltage signal from a secondary-side superimposition connection (408), wherein the second alternating voltage signal substantially has the fundamental wave portion which has been transformed in terms of the voltage thereof and the harmonic wave portion which has been transformed in terms of the voltage thereof, and
- transformation and non-galvanic superimposition of the fundamental wave portion and the harmonic wave portion which is non-damped as far as possible for the second alternating voltage signal with at least one magnetic core in order to adapt, in particular to reduce, harmonic waves in a network portion which is electrically connected to the secondary-side superimposition connection.

13. Method according to claim 12,
**characterised in that**
a transformer device (124) according to any one of claims 1 to 9 is used to carry out the method.

## Revendications

1. Dispositif transformateur (124) pour transformer un premier signal de tension alternative en un deuxième signal de tension alternative destiné à être injecté dans un réseau d'alimentation électrique (120), et le dispositif transformateur comprend
- une borne d'onde fondamentale côté primaire (406) destinée à entrer le premier signal de tension alternative, dans lequel le premier signal de tension alternative présente ou est sensiblement une composante d'onde fondamentale,
- une borne d'onde harmonique côté primaire (410) destinée à entrer au moins un signal d'onde harmonique électrique, dans lequel le signal d'onde harmonique présente sensiblement une composante d'onde harmonique,
- une borne de battement côté secondaire (408) destinée à délivrer le deuxième signal de tension alternative, dans lequel le deuxième signal de tension alternative présente sensiblement la composante d'onde fondamentale transformée dans sa tension et la composante d'onde harmonique transformée dans sa tension,
et
- au moins un noyau magnétique bobiné destiné à transformer et à superposer de manière non galvanique la composante d'onde fondamentale et la composante d'onde harmonique en le deuxième signal de tension alternative, dans lequel un réseau de parc éolien ou un tronçon de réseau du réseau d'alimentation électrique est connecté à la borne de battement de sorte que le signal commun est appliqué ou injecté dans le parc éolien ou dans le tronçon de réseau avec la composante d'onde harmonique superposée dans la mesure du possible non atténuée conjointement avec la composante d'onde fondamentale.

2. Dispositif transformateur (124) selon la revendication 1,
**caractérisé en ce que**
- l'au moins un noyau magnétique ou au moins un noyau magnétique de ce type présente une zone de superposition d'onde harmonique (HA) destinée à injecter de manière séparée la composante d'onde harmonique, dans lequel
- la zone de superposition d'onde harmonique est bobinée avec au moins en enroulement d'onde harmonique (705, 710, 712), qui est couplé électriquement à la borne d'onde harmonique pour transformer le signal électrique d'onde harmonique en un signal magnétique d'onde harmonique dans la zone de superposition d'onde harmonique et le superposer à la composante d'onde fondamentale.

3. Dispositif transformateur selon la revendication 1 ou 2,
**caractérisé en ce que** l'au moins un noyau magnétique
- présente une zone de transformation magnétique (TA) destinée à transformer le premier signal de tension alternative en le deuxième signal de tension alternative, dans lequel
- la zone de transformation
- - est bobinée avec un enroulement fondamental primaire (702, 706, 714), qui est couplé électriquement à la borne d'onde fondamentale, et
- - est bobinée avec un enroulement fondamental secondaire (704, 708, 716), qui est couplé électriquement à la borne de superposition, et dans lequel
- un ou l'enroulement d'onde harmonique est disposé de manière sensiblement adjacente à l'enroulement secondaire en particulier pour transformer le signal électrique d'onde harmonique en un signal magnétique d'onde harmonique dans la zone de superposition d'onde harmonique et pour le superposer à la composante d'onde fondamentale.

4. Dispositif transformateur (124) selon la revendication 3,
**caractérisé en ce que**
- la zone de transformation (TA) et la zone de superposition d'onde harmonique (HA) sont réalisées de manière à se chevaucher en particulier de telle sorte que, dans un tronçon de superposition du noyau magnétique, l'enroulement fondamental primaire (702), l'enroulement fondamental secondaire (704) et l'enroulement d'onde harmonique (705) sont enroulés les uns au-dessus des autres autour du noyau magnétique en couches dans une direction radiale, et/ou que l'enroulement d'onde harmonique (705) est disposé de manière sensiblement adjacente à l'enroulement fondamental secondaire (704).

5. Dispositif transformateur (124) selon l'une quelconque des revendications précédentes,
**caractérisé en ce que**
- l'au moins un noyau magnétique est divisé en un noyau principal (709) et en un noyau auxiliaire (707), dans lequel
- le noyau principal est bobiné avec l'enroulement fondamental primaire (706) et un enroulement fondamental secondaire (708) pour transformer le premier signal de tension alternative en un deuxième signal fondamental de tension alternative, dans lequel le deuxième signal fondamental de tension alternative est émis sur une ligne fondamentale côté secondaire, et
- le noyau auxiliaire (707) est bobiné avec un ou l'enroulement d'onde harmonique (710) et est couplé de manière magnétique à la ligne fondamentale côté secondaire pour transformer la composante d'onde harmonique et la superposer au deuxième signal fondamental de tension alternative en le deuxième signal de tension alternative.

6. Dispositif transformateur (124) selon la revendication 5,
**caractérisé en ce que**
- le noyau auxiliaire (707) est réalisé en tant que noyau transformateur à haute fréquence.

7. Dispositif transformateur (124) selon l'une quelconque des revendications précédentes, **caractérisé en ce que**
- l'au moins un signal électrique d'onde harmonique destiné à être entré sur la borne d'onde harmonique côté primaire (410, 610, 720) est produit au moyen d'un ensemble de production de signal d'onde harmonique (400, 600), en particulier est produit avec un convertisseur haute fréquence et/ou avec un filtre actif.

8. Dispositif transformateur (124) selon la revendication 7,
**caractérisé en ce que**
- un moyen de mesure est prévu pour détecter le deuxième signal de tension alternative côté secondaire, et que
- un parcours de signal (401, 601) est prévu pour transmettre le signal détecté sur celui-ci à l'ensemble de production de signal d'onde harmonique, dans lequel le dispositif transformateur est préparé pour produire le signal d'onde harmonique en fonction du signal détecté par le moyen de mesure.

9. Dispositif transformateur (124) selon l'une quelconque des revendications précédentes,
**caractérisé en ce que**
- le dispositif transformateur, en particulier la borne d'onde harmonique (720), est préparé pour que le signal d'onde harmonique soit entré sur la borne d'onde harmonique en tant que signal de tension harmonique pour superposer le signal de tension harmonique transformé à la composante d'onde fondamentale transformée, à savoir au deuxième signal fondamental de tension alternative, dans lequel en particulier
- un ensemble transformateur supplémentaire est prévu pour diminuer le signal de tension harmonique entré sur la borne d'onde harmonique pour la superposition, et dans lequel de préférence
- le dispositif transformateur est prévu pour produire le signal de haute tension en fonction d'un besoin en courant d'onde harmonique détecté, en particulier pour le produire au moyen de l'ensemble de production de signal d'onde harmonique (400, 600).

10. Eolienne (101) destinée à produire une puissance électrique à partir du vent destinée à être injectée dans un réseau d'alimentation électrique,
**caractérisée en ce que**
- l'éolienne est raccordée au réseau électrique par l'intermédiaire d'au moins un dispositif transformateur selon l'une quelconque des revendications 1 à 9.

11. Parc éolien (112) destiné à produire une puissance électrique à partir du vent destinée à être injectée dans un réseau d'alimentation électrique,
**caractérisé en ce que**
- le parc éolien présente au moins une éolienne (101) selon la revendication 10, et/ou
- qu'il présente un dispositif transformateur (124) selon l'une quelconque des revendications 1 à 9.

12. Procédé pour transformer un premier signal de tension alternative en un deuxième signal de tension alternative destiné à être injecté dans un réseau d'alimentation électrique, comprenant les étapes :
- d'entrée du premier signal de tension alternative dans une borne d'onde fondamentale côté primaire (406), dans lequel le premier signal de tension alternative présente sensiblement une composante d'onde fondamentale ou est une composante d'onde fondamentale,
- d'entrée d'au moins un signal électrique d'onde harmonique dans une borne d'onde harmonique côté primaire (410), dans lequel le signal d'onde harmonique présente sensiblement une composante d'onde harmonique,
- de délivrance du deuxième signal de tension alternative provenant d'une borne de battement côté secondaire (408), dans lequel le deuxième signal de tension alternative présente sensiblement la composante d'onde fondamentale transformée dans sa tension et la composante d'onde harmonique transformée dans sa tension, et
- de transformation et de superposition non galvanique de la composante d'onde fondamentale et de la composante d'onde harmonique dans la mesure du possible non atténuée en le deuxième signal de tension alternative avec au moins un noyau magnétique pour adapter des ondes harmoniques, en particulier pour les réduire, dans un tronçon de réseau, qui est raccordé électriquement à la borne de battement côté secondaire.

13. Procédé selon la revendication 12,
**caractérisé en ce que**
un dispositif transformateur (124) selon l'une quelconque des revendications 1 à 9 est utilisé pour exécuter le procédé.
